# EUROPEAN PATENT SPECIFICATION

(11) **EP 2 870 735 B1**
(45) Date of publication and mention of the grant of the patent: **22.05.2019**
(21) Application number: 12880362.4
(22) Date of filing: 06.07.2012
(51) Int. Cl.: H04L 12/853, H04L 29/06

(54) **METHOD FOR ADDING CLIENT CAPABILITY DATA TO A SIP MESSAGE**
VERFAHREN ZUM HINZUFÜGEN VON CLIENT-KAPAZITÄTSDATEN ZU EINER SIP-NACHRICHT
PROCÉDÉ D'AJOUT DE DONNÉES DE CAPACITÉ CLIENT À UN MESSAGE SIP

(43) Date of publication of application: 13.05.2015
(73) Proprietor: Telefonaktiebolaget LM Ericsson (publ), 164 83 Stockholm (SE)
(72) Inventor: OPSENICA, Miljenko, FI-02210 Espoo (FI)
(74) Representative: Brann AB
(86) International application number: PCT/SE2012/050801
(87) International publication number: WO 2014/007708

(56) References cited:
- EP-A2- 1 558 044
- US-A1- 2006 047 840
- US-A1- 2006 239 247
- US-A1- 2007 281 681
- US-A1- 2008 080 527
- US-A1- 2009 300 115
- US-A1- 2009 300 115
- US-A1- 2011 019 650
- Baz I. Baz Castillo: "The WebSocket Protocol as a Transport for the Session Initiation Protocol (SIP)", , 16 April 2012 (2012-04-16), XP055168443, Retrieved from the Internet: URL:http://tools.ietf.org/pdf/draft-ibc-si pcore-sip-websocket-02.pdf [retrieved on 2015-02-09]
- "Internet Engineering Task Force (IETF)", , 1 December 2011 (2011-12-01), XP055168447, Retrieved from the Internet: URL:http://tools.ietf.org/pdf/rfc6455.pdf
- I. BAZ CASTILLO ET AL.: 'The WebSocket Protocol as a Transport for the Session Initiation Protocol (SIP)' 16 April 2012, XP055168443 Retrieved from the Internet: <URL:draft- ibc-sipcore-sip-websocket-02>
- G. MONTENEGRO ET AL.: 'HyBi WebSocket Requirements and Features' 14 March 2011, XP015074797 Retrieved from the Internet: <URL:draft-ietf-hybi-websocket- requirements-02>
- FETTE ET AL.: 'THE WEBSOCKET PROTOCOL, INTERNET ENGINEERING TASK FORCE (IETF)' RFC 6455 December 2011, XP055168447

## Description

### TECHNICAL FIELD

The invention relates to forwarding of a SIP (Session Initiation Protocol) message.

### BACKGROUND

The signaling protocol SIP (Session Initiation Protocol) has become one of the strongest signalling solutions for real time communication, such as for voice or video calls over IP (Internet Protocol) . Traditionally, SIP traffic has been transferred via transport protocols such as UDP (User Datagram Protocol), TCP (Transmission Control Protocol), and TLS (Transport Layer Security) over IP.

There is a current trend of shifting real-time communication from the traditional legacy networks towards the Internet and web browsers in particular. One trigger for that change has been strong focus in the ICT (Information and Communication Technologies) industry on the web browser business and cloud computing background. The new HTML₅ (Hypertext Markup Language 5) Web technology has further enabled that shift, providing new opportunities for real-time communication over the Web. HTTP (Hypertext Transfer Protocol) is the most commonly used connectivity option in the Web world, e.g. due to ability to handle issues with firewall.

Since real-time communication often needs a permanent bidirectional connection, a protocol called WebSocket, which resembles a TCP socket but is based on the HTTP protocol, has been selected as a best candidate for the transport layer. SIP has proved to be a major candidate for the signalling over WebSocket for real-time communication.

There is an issue in routing SIP messages from web clients to the appropriate SIP application. The routing mechanism can differ depending on the SIP application implementation, creating heavy demands on the web clients.

US 2009/0300115 A1 describes a method and a node at an entry point of an IP Multimedia Subsystem (IMS) for adapting a Session Initiation Protocol (SIP) message. Baz I. Baz Castillo "The WebSocket Protocol as a Transport for the Session Initiation Protocol (SIP)" describes a WebSocket protocol that enables two-way real-time communication between Session Initiation Protocol (SIP) entities.

"Internet Engineering Task Force (IETF)" XP055168447 describes a WebSocket Protocol that enables two-way communication between a client running untrusted code in a controlled environment and a remote host that has opted-in to communications from that code.

### SUMMARY

It is an object here to provide more robust routing of SIP messages from client devices to SIP applications. The invention is defined by independent claims 1, 8 and 13. Further details are defined in the dependent claims.

According to a first aspect, it is presented a server for forwarding a SIP, Session Initiation Protocol, message. The server comprises a processor and a computer program product. The computer program product stores instructions that, when executed by the processor, causes the server to: receive a WebSocket handshake request from a client device, the WebSocket handshake request comprising a SIP service capability indicator for the client device, wherein the SIP service capability indicator comprises two or more headers of the WebSocket handshake request, each header indicating a single SIP service capability of the client device; establish a WebSocket connection; store, in a data memory, service capability data for the client device, the service capability data being based on the SIP service capability indicator; receive a SIP message from the client device; add a header field to the SIP message, the content of the header field being based on the service capability data, resulting in a modified SIP message; and forward the modified SIP message to a SIP application router, wherein the SIP application router parses the added header field and forwards the modified SIP message to an appropriate SIP application.

By obtaining the SIP service capability indicator only once in the WebSocket handshake request, and storing service capability data based on the SIP service capability indicator, the client is relieved of including any capability indicators in SIP messages down the line. Furthermore, the server can in this way create service capability data to be included in further SIP messages in a format adapted to the receiver, such as a SIP application. In other words, the client device can indicate service capability in a single, simple format in the SIP service capability indicator, while the server can tailor the service capability data for the receiver application.

The SIP service capability indicator maybe comprised in a header of the WebSocket handshake request. This provides a convenient way for the client device to provide the SIP service capability indicator.

The SIP service capability indicator may be comprised in a header of the WebSocket handshake request, the name of which is selected from the group of header names consisting of Sec-WebSocket-Protocol, Sec-WebSocket-Service, Sec-WebSocket-Application, Accept-Service, and Accept-Application. These are all appropriate headers which the client device can use to provided the SIP service capability indicator.

The instructions may comprise instructions to repeat the instructions to receive a SIP message, add a header field and forward the modified SIP message, for any further SIP messages from the client device received over the WebSocket connection. In this way, the stored service capability data can be reused for each SIP message for the duration of the WebSocket connection.

The service capability data may comprise an association with the WebSocket connection.

The header field of the SIP message may be an Accept-Contact or a Contact header field. These are appropriate header fields for providing service capability data for routing by the SIP application router.

The server may comprise the SIP application router.

The server may be arranged to forward the modified SIP message to the SIP application router being located in a different device from the server.

According to a second aspect, it is presented a method for forwarding a SIP, Session Initiation Protocol, message. The method is executed by a server and comprises the steps of: receiving a WebSocket handshake request from a client device, the WebSocket handshake request comprising a SIP service capability indicator for the client device, wherein the SIP service capability indicator comprises two or more headers of the WebSocket handshake request, each header indicating a single SIP service capability of the client device; establishing a WebSocket connection; storing, in a data memory, service capability data associated with the client device, the service capability data being based on the SIP service capability indicator; receiving a SIP message from the client device; adding a header field to the SIP message, the content of the header field being based on the service capability data, resulting in a modified SIP message; and forwarding the modified SIP message to a SIP application router, wherein the SIP application router parses the added header field and forwards the modified SIP message to an appropriate SIP application.

In the step of receiving a WebSocket handshake request, the SIP service capability indicator may be comprised in a header of the WebSocket handshake request.

In the step of receiving a WebSocket handshake request, the SIP service capability indicator may be comprised in the header of the WebSocket handshake request, the name of which is selected from the group of header names consisting of Sec-WebSocket-Protocol, Sec-WebSocket-Service, Sec-WebSocket-Application, Accept-Service, and Accept-Application.

The steps of receiving a SIP message, adding a header field and forwarding the modified SIP message may be repeated for any further SIP messages received from the client device over the WebSocket connection.

The step of storing service capability data may comprise storing the service capability data comprising an association with the WebSocket connection.

In the step of adding a header field to the SIP message, the header field may be an Accept-Contact or a Contact header field.

According to a third aspect, it is presented a computer program for forwarding SIP, Session Initiation Protocol, messages. The computer program comprises computer program code which, when run on a server, causes the server to: receive a WebSocket handshake request from a client device, the WebSocket handshake request comprising a SIP service capability indicator for the client device, wherein the SIP service capability indicator comprises two or more headers of the WebSocket handshake request, each header indicating a single SIP service capability of the client device; establish a WebSocket connection; store, in a data memory, service capability data associated with the client device, the service capability data being based on the SIP service capability indicator; receive a SIP message from the client device; add a header field to the SIP message, the content of the header field being based on the service capability data, resulting in a modified SIP message; and forward the modified SIP message to a SIP application router, wherein the SIP application router parses the added header field and forwards the modified SIP message to an appropriate SIP application.

The SIP service capability indicator may be comprised in a header of the WebSocket handshake request.

The SIP service capability indicator may be comprised in the header of the WebSocket handshake request, the name of which is selected from the group of header names consisting of Sec-WebSocket-Protocol, Sec-WebSocket-Service, Sec-WebSocket-Application, Accept-Service, and Accept-Application.

The computer program code may comprise computer program code to repeat the computer program code to receive a SIP message, add a header field and forward the modified SIP message, for any further SIP messages from the client device received over the WebSocket connection.

The service capability data may comprise an association with the WebSocket connection.

The header field of the SIP message may be an Accept-Contact or a Contact header field.

According to a fourth aspect it is presented a computer program product comprising a computer program according to the third aspect and a computer readable means on which the computer program is stored.

It is to be noted that any feature of the first, second, third and fourth aspects may, where appropriate, be applied to any other of these aspects.

Whenever used in the claims or the description, the term plurality is to be interpreted as two or more.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating an environment in which embodiments presented herein can be applied;
Fig 2A is a schematic illustration of the server of Fig 1, where a WebSocket connector, an application router and SIP applications are co-located in the server;
Fig 2B is a schematic illustration of the server of Fig 1, where the WebSocket connector is comprised in the server, while the application router and the SIP applications are located in a different device;
Figs 3A-B are sequence diagrams illustrating communication between the various components of the system of Fig1;
Figs 4A-B are flow charts illustrating two methods performed in the server of Fig 1 for forwarding SIP messages;
Fig 5 is a schematic diagram illustrating some components of the server of Fig 1; and
Fig 6 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

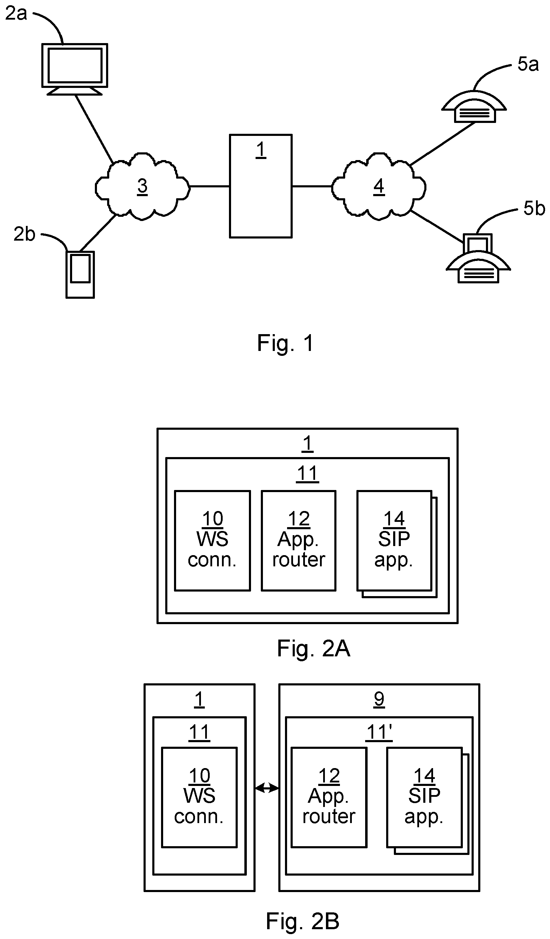

Fig 1 is a schematic diagram illustrating an environment in which embodiments presented herein can be applied. A number of client devices, in this example two client devices 2a-b are connected via a wide area network 3, such as the Internet, to a server 1. The server 1 is also connected, via one or more legacy networks 4, to a number of legacy devices, in this example two legacy devices 5a-b. Each one of the client devices 5a-b can be e.g. a mobile phone, a desktop computer, a laptop or a tablet/slate computer, a TV or other device, comprising web client computer program using the WebSocket and SIP protocols to set up real-time communication sessions with assistance from the server 1.

The server 1 acts as a gateway, allowing client devices 2a-b and legacy devices 5a-b to communicate with each other using e.g. SIP. The communication can for example involve voice calls, video calls, etc.

Fig 2A is a schematic illustration of the server of Fig 1, where a WebSocket connector 10, an application router 12 and one or more SIP applications 14 are co-located in an application server 11 executing on the server 1. The application server 11 is software implementing an environment which houses individual SIP applications 14 as well as the WebSocket connector 10 and the application router 12. The application server 11 provides an execution environment, including anywhere between none at all and all of services such as security, data services, transaction support, load balancing, and management of large distributed systems. For example, the application server 11 could be an enterprise platform server which supports the Java Platform, Enterprise Edition. However, it is to be noted that the application server 11 could be based on any suitable application server 11 platform other than a Java platform, e.g. Microsoft Internet Information Services or JavaScript based application servers such as Node.js.

The WebSocket connector 10 is a set of software running in the application server 11 which allows WebSocket connections to be set up with the client devices 2a-b. As will be explained in more detail below, once a WebSocket connection is established, the client devices 2a-b use SIP over WebSocket to communicate with the SIP applications 14, which in turn perform most of the gateway logic for communication with the legacy networks 4 in that the SIP applications perform any necessary conversion and logic to allow the client devices 2a-b to communicate over the legacy network 4 with the legacy devices 5a-b. The application router 12 is a set of software running in the application server 11 which routes communication from the client devices 2a-b to appropriate SIP application.

In the embodiment of Fig 2A, there is a single server 1 containing a single application server 11, on which the WebSocket connector 10, application router 12 and SIP applications 14 all execute. It is to be understood that the application server, as well as the server 1, could be load balanced using several physical entities.

Each SIP application 14 corresponds to a particular service. For example, there may be one SIP application for voice calls and one SIP application for video calls. One task of the server 1, and the application router 12 in particular, is to route incoming SIP messages to the appropriate SIP application. The SIP applications execute within the application server 11 environment of the server, and can e.g. be based on servlets, in the example of a Java environment.

Fig 2B is a schematic illustration of the server of Fig 1, where the WebSocket connector is comprised in the application server 11 executing on the server 1, while the application router 12 and the SIP applications 14 are located in a different application server 11' executing on a different server 9.

In this embodiment, the WebSocket connector 10 is contained in one server 1 and both the application router 12 and the SIP applications are contained in a second, separate, server 9.

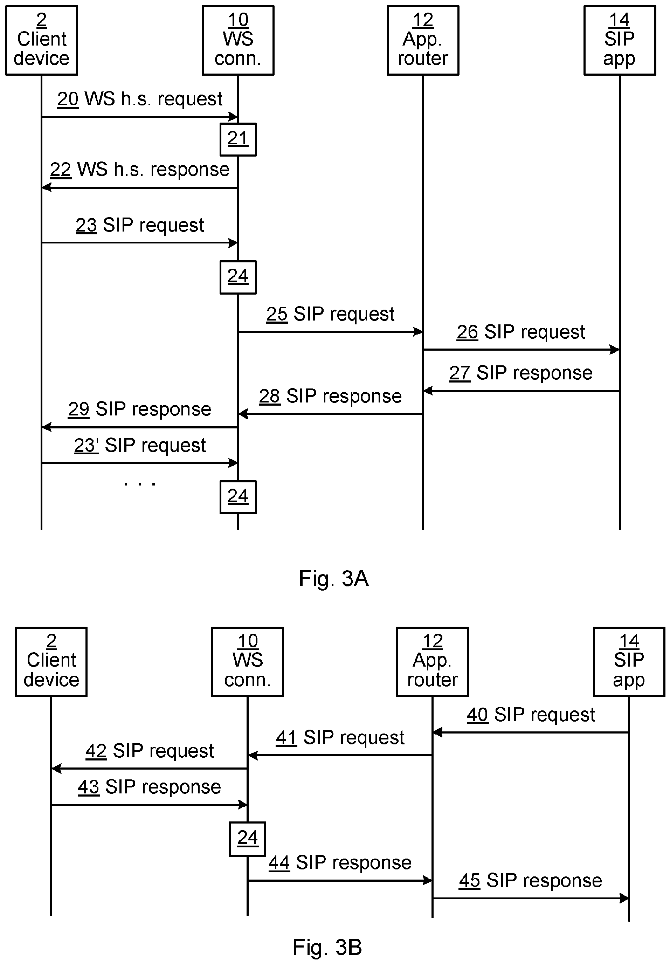

Fig 3A is a sequence diagram illustrating communication between the various components of the system of Fig1.

Initially, the client device 2 sends a WebSocket handshake request 20 as a HTTP (Hypertext Transfer Protocol) GET message to the WebSocket connector 10. The WebSocket handshake request comprises a SIP service capability indicator associated with the client device 2. For example, the client device may be capable of sending/receiving voice calls but not video calls.

One example of a WebSocket handshake request 20 is as follows:

```
        GET /real-time-communicator HTTP/1.1
        Host: example.com
        Upgrade: websocket
        Connection: Upgrade
        Sec-WebSocket-Key: dGhIllHNhbXBsZSBub25iZQ==
        Sec-WebSocket-Version: 13
        Sec-WebSocket-Protocol: IMS-Sip; service="voice-call-to-ims";
             application="webrtc-audio-app"
        Origin: http://example.com
```

In this example, the capability indicator is contained in the Sec-WebSocket-Protocol header. Hence, by reading the value (to the right of the colon) of the header, the service is a voice call using IMS (IP Multimedia System), using an application called "webrtc-audio-app". The capability indicator is thus in this example 'IMS-Sip; service="voice-call-to-ims"; application="webrtc-audio-app"'.

Optionally, the appliaction parameter is imitted. The value of the header could then read, in one example, 'IMS-Sip; service="voice-call-to-ims"'. The capability indicator is thus in this example 'IMS-Sip; service="voice-call-to-ims".

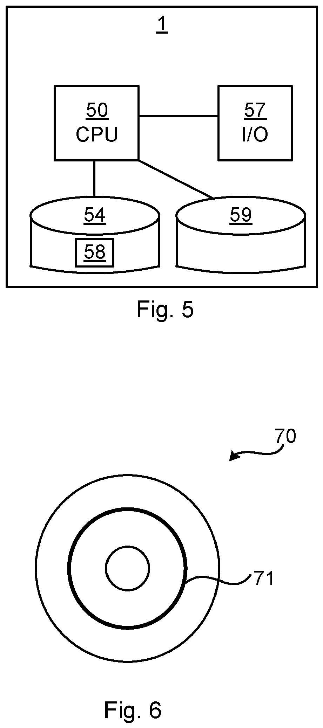

The WebSocket connector 10 stores 21 service capability data in a data memory (see data memory 59 in Fig 5), based on the SIP service capability indicator, for later use. At this stage, the WebSocket connector 10 can make appropriate lookups and logic, e.g. what application to use (if not specified in the WebSocket handshake request) and in what format future headers should be in, and store as part of the service capability data. Subsequently, the WebSocket connector 10 sends a WebSocket handshake response as an HTTP 101 message indicating an accepted upgrade to WebSocket. The WebSocket connection is now established between the client device 2 and the WebSocket connector 10.

The client device 2 can then commence communicating over SIP, thus sending a SIP message, here in the form of a SIP request 23 to the WebSocket connector 10, over HTTP. One example of the SIP request from the client device is as follows:

```
        REGISTER sip:reqistrar.example.com SIP/2.0
        via: SIP/2.0/TCP 127.0.0.1:5060;branch=z9hG4bK84361
        Max-forwards: 70
        To: <sip:testuser01@example.com>
        From: <sip:testuser01@example.com>;tag=z9hGbK31388967
        Call-ID: 090091936844@127.0.0.1
        CSeq: 1 REGISTER
        Contact:
             <sip:testuser01@example.com;transport=ws>;expires=360000;
        Content-length: 0
```

Note the absence of any indication of capability of, e.g. performing voice calls in the SIP request 23.

The WebSocket connector 10 then performs some processing 24 by reading the previously stored service capability data and adding appropriate header field or fields to the SIP request 23 that was just received, resulting in a modified SIP message in the form of a modified SIP request 25. Based on the example messages above, one example of a modified SIP request 25 is as follows:

```
        REGISTER sip:reqistrar.example.com SIP/2.0
        via: SIP/2.0/TCP 127.0.0.1:5060;branch=z9hG4bK84361
        Max-forwards: 70
        To: <sip:testuser01@example.com>
        From: <sip:testuser01@example.com>;tag=z9hGbK31388967
        Call-ID: 090091936844@127.0.0.1
        CSeq: 1 REGISTER
        Contact:sip:
             <sip:testuser01@example.com;transport=ws>;expires=360000;
             +q.3gpp.iari-ref="urn%Aurn-7%3A3gpp-
             appplication.ims.iari.webrtc-audio";+g.3gpp.icsi.-
             ref="urn%3Aurn-7%3A3gpp-service.ims.icsi.voice-to-ims"
        Content-length: 0
```

Note the Contact header in the modified SIP request 25, which in this example containing routing data obtained from previously stored service capability data, which in this example is ' +q.3gpp.iari-ref="urn%Aurn-7%3A3gpp-appplication.ims.iari.webrtc-audio";+g.3gpp.icsi.-ref="urn%3Aurn-7%3A3gpp-service.ims.icsi.voice-to-ims"'. Optionally, an Accept-Contact header could be used in addition to the Contact header.

The WebSocket connector 10 subsequently sends the modified SIP request 25 to the application router 12. The application router 12 parses the added header field/fields to be able to forward the modified SIP request 26 to the appropriate SIP application 14, which responds with a SIP response 27 to the application router 12. The application router 12 forwards the SIP response 28 to the WebSocket connector, which in turn, forwards the SIP response 29 to the client device 2, i.e. the source of the original SIP request 23.

Further SIP requests 23' can be sent from the client device 2 after which the process is repeated, with the WebSocket connector again using the originally stored service capability data to add appropriate header or headers to the SIP request to enable appropriate SIP application routing by the application router 12.

Fig 3B shows continued messaging, where the SIP application 14 initiates a SIP message 40 to the application router 12, which forwards the SIP request 41 to the WebSocket connector 10 for delivery of the SIP request 42 to the client device 2. The client device 2 acts on the SIP request 42 and issues a SIP message in the form of a SIP response 43 to the WebSocket connector 10.

In analogy with the routing SIP requests described above with reference to Fig 3A, the WebSocket connector here performs the same processing 24 by reading the previously stored service capability data and adding appropriate header field or fields to the SIP response 43 that was just received, resulting in a modified SIP message here in the form of a modified SIP response 44 which is sent to the application router. The application router parses 12 the added header field/fields to be able to forward the modified SIP response 45 to the appropriate SIP application 14.

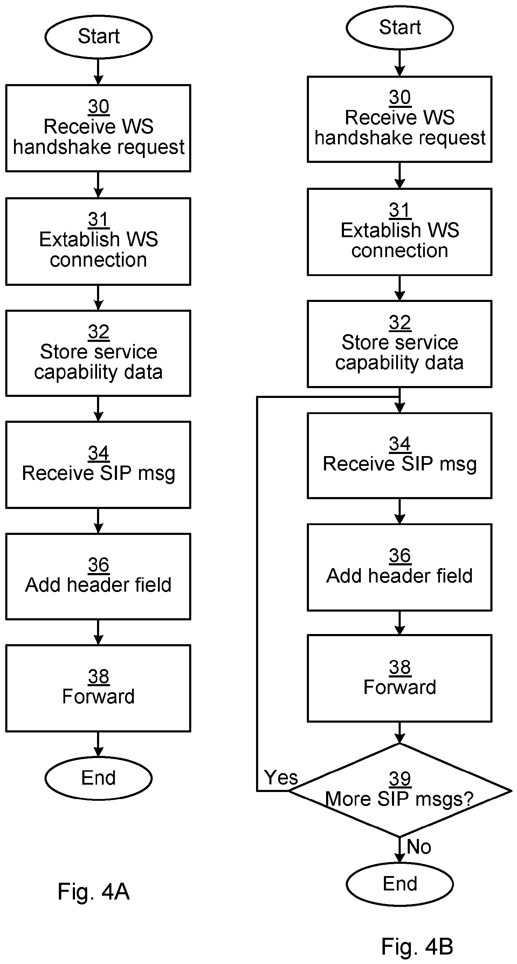

Figs 4A-B are flow charts illustrating two methods performed in the server 1 of Fig 1 for forwarding SIP messages. Firstly, the method shown in Fig 4A will be disclosed. The methods correspond to the sequence diagrams of Figs 3A-B but are focused to be on the perspective of the server 1.

In a *receive WebSocket handshake request* step 30, the server receives a WebSocket handshake request from the client device. The WebSocket handshake request comprises a SIP service capability indicator for the client device. The SIP service capability indicator can e.g. be comprised in a header such as 'Sec-WebSocket-Protocol', 'Sec-WebSocket-Service', 'Sec-WebSocket-Application', 'Accept-Service', and 'Accept-Application', of the WebSocket handshake request.

Optionally, the SIP service capability indicator comprises a plurality of headers of the WebSocket handshake request, where each header indicates a single SIP service capability of the client device.

In an *establish WebSocket* step 31, a WebSocket connection is established. This includes reserving resources in the server and associating the reserved resources with the WebSocket connection. Also, a WebSocket handshake response is sent to the client device.

In a *store service capability data* step 32, service capability data based on the SIP service capability indicator is stored in a data memory (see 59 of Fig 5). The service capability data can be stored comprising an association with the particular WebSocket connection in question. By obtaining the SIP service capability indicator only once in the WebSocket handshake request, and storing service capability data based on the SIP service capability indicator, the client is relieved of including any capability indicators in SIP messages down the line.

In a *receive SIP message* step 34, a SIP message is received from the client device. The SIP message can e.g. be a SIP request like the SIP request 23 of Fig 3A or a SIP response such as the SIP response 43 of Fig 3B.

In an *add header field* step 36, a header field is added to the SIP message. The content of the header field is based on the service capability data stored in the data memory. This results in a modified SIP message. The header field can e.g. be 'Accept-Contact'.

In a *forward* step 38, the modified SIP message is forwarded to the SIP application router.

The method shown in Fig 4B is similar to the method shown in Fig 4A. The steps of Fig 4A will not be described again.

In the method shown Fig 4B, there is a conditional *more SIP messages* step 39 after the *forward* step 38.

In the conditional *more SIP messages* step 39, it is determined whether there are any more SIP messages. If this is the case, the method continues to the *receive SIP message* step 34. Otherwise, the method ends.

Using the described methods, the client device is relieved of having to include any routing information in the SIP messages; it is sufficient to only include some form of routing information in the WebSocket handshake request. Moreover, the format of the headers can be simplified, whereby the client device effectively delegates to the server the task of translating the capabilities to SIP headers of correct format for the various SIP applications.

Fig 5 is a schematic diagram showing some components of the server 1 Fig 1. A processor 50 is provided using any combination of one or more of a suitable central processing unit (CPU), multiprocessor, microcontroller, digital signal processor (DSP), application specific integrated circuit etc., capable of executing software instructions contained in a computer program 58 stored in a computer program product 54, e.g. in the form of a memory, but not in the form of a signal or any form of electromagnetic wave. The processor 50 can be configured to execute the method described with reference to Figs 3A-B above.

The computer program product 54 can be a memory being any combination of read and write memory (RAM) and read only memory (ROM). The memory also comprises persistent storage, which, for example, can be any single one or combination of magnetic memory, optical memory, solid state memory or even remotely mounted memory. The processor 50 controls the general operation of the server 1.

The server 1 further comprises a data memory 59, which is a read and write memory. The data memory 59 may also comprises persistent storage, which, for example, can be any single one or combination of magnetic memory, optical memory, solid state memory or even remotely mounted memory. Optionally, the computer program product 54 and the data memory 59 can form part of the same memory.

The server 1 further comprises an I/O interface 57 for communicating with the wide area network 3 and the legacy network 4. Other components of the radio network controller 8 are omitted in order not to obscure the concepts presented herein.

Fig 6 shows one example of a computer program product 70 comprising computer readable means. On this computer readable means a computer program 71 can be stored, which computer program can cause a controller to execute a method according to embodiments described herein. In this example, the computer program product is an optical disc, such as a CD (compact disc) or a DVD (digital versatile disc) or a Blu-Ray disc. As explained above, the computer program product could also be embodied as a memory of a device, such as the computer program product 54 of Fig 5. While the computer program 71 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A server (1) for forwarding a SIP, Session Initiation Protocol, message, the server comprising:
a processor (50); and
a computer program product (54) storing instructions that, when executed by the processor, causes the server (1) to:
receive a WebSocket handshake request from a client device (2a-b), the WebSocket handshake request comprising a SIP service capability indicator for the client device (2a-b), wherein the SIP service capability indicator comprises two or more headers of the WebSocket handshake request, each header indicating a single SIP service capability of the client device (2a-b);
establish a WebSocket connection;
store, in a data memory (59), service capability data for the client device (2a-b), the service capability data being based on the SIP service capability indicator;
receive the SIP message from the client device (2a-b);
add a header field to the SIP message, the content of the header field being based on the service capability data, resulting in a modified SIP message; and
forward the modified SIP message to a SIP application router, wherein the SIP application router parses the added header field and forwards the modified SIP message to an appropriate SIP application.

2. The server (1) according to claim 1, wherein the SIP service capability indicator is comprised in the header of the WebSocket handshake request, the name of which is selected from the group of header names consisting of Sec-WebSocket-Protocol, Sec-WebSocket - Service, Sec-WebSocket -Application, Accept-Service, and Accept-Application.

3. The server (1) according to any one of the preceding claims, wherein the instructions comprise instructions to repeat the instructions to receive a SIP message, add a header field, and forward the modified SIP message, for any further SIP messages from the client device (2a-b) received over the WebSocket connection.

4. The server (1) according to any one of the preceding claims, wherein the service capability data comprises an association with the WebSocket connection.

5. The server (1) according to any one of the preceding claims, wherein the header field of the SIP message is an Accept-Contact or a Contact header field.

6. The server (1) according to any one of the preceding claims, wherein the server comprises the SIP application router.

7. The server (1) according to any one of the preceding claims, wherein the server is arranged to forward the modified SIP message to the SIP application router being located in a different device from the server.

8. A method for forwarding a SIP, Session Initiation Protocol, message, the method being executed by a server (1) and comprising the steps of:
receiving (30) a WebSocket handshake request from a client device (2a-b), the WebSocket handshake request comprising a SIP service capability indicator for the client device (2a-b), wherein the SIP service capability indicator comprises two or more headers of the WebSocket handshake request, each header indicating a single SIP service capability of the client device (2a-b);
establishing (31) a WebSocket connection;
storing (32), in a data memory, service capability data associated with the client device (2a-b), the service capability data being based on the SIP service capability indicator;
receiving (34) the SIP message from the client device (2a-b);
adding (36) a header field to the SIP message, the content of the header field being based on the service capability data, resulting in a modified SIP message; and
forwarding (38) the modified SIP message to a SIP application router, wherein the SIP application router parses the added header field and forwards the modified SIP message to an appropriate SIP application.

9. The method according to claim 8, wherein in the step of receiving (30) the WebSocket handshake request, the SIP service capability indicator is comprised in the header of the WebSocket handshake request, and wherein the name of the header is selected from the group of header names consisting of Sec-WebSocket-Protocol, Sec-WebSocket -Service, Sec-WebSocket -Application, Accept -Service, and Accept -Application.

10. The method according to any one of claims 8 to 9, wherein the steps of receiving (34) the SIP message, adding (36) the header field, and forwarding (38) the modified SIP message are repeated for any further SIP messages received from the client device (2a-b) over the WebSocket connection.

11. The method according to any one of claims 8 to 10, wherein the step of storing (32) the service capability data comprises storing the service capability data comprising an association with the WebSocket connection.

12. The method according to any one of claims 8 to 11, wherein in the step of adding (36) the header field to the SIP message, the header field is an Accept-Contact or a Contact header field.

13. A computer program (71, 58) for forwarding a SIP, Session Initiation Protocol, message, the computer program comprising computer program code which, when run on a server, causes the server to:
receive a WebSocket handshake request from a client device (2a-b), the WebSocket handshake request comprising a SIP service capability indicator for the client device (2a-b), wherein the SIP service capability indicator comprises two or more headers of the WebSocket handshake request, each header indicating a single SIP service capability of the client device (2a-b);
establish a WebSocket connection;
store, in a data memory, service capability data associated with the client device (2a-b), the service capability data being based on the SIP service capability indicator;
receive the SIP message from the client device (2a-b);
add a header field to the SIP message, the content of the header field being based on the service capability data, resulting in a modified SIP message; and
forward the modified SIP message to a SIP application router, wherein the SIP application router parses the added header field and forwards the modified SIP message to an appropriate SIP application.

## Patentansprüche

1. Server (1) zum Weiterleiten einer SIP(Session Initiation Protocol)-Nachricht, wobei der Server Folgendes umfasst:
einen Prozessor (50); und
ein Computerprogrammprodukt (54), auf dem Anweisungen gespeichert sind, die, wenn sie durch den Prozessor ausgeführt werden, den Server (1) zu Folgendem veranlassen:
Empfangen einer Anforderung eines WebSocket-Handshakes von einer Client-Vorrichtung (2a-b), wobei die Anforderung eines WebSocket-Handshakes einen Indikator für eine SIP-Dienstkapazität für die Client-Vorrichtung (2a-b) beinhaltet, wobei der Indikator für die SIP-Dienstkapazität zwei oder mehr Header der Anforderung eines WebSocket-Handshakes umfasst, wobei jeder Header eine einzelne SIP-Dienstkapazität der Client-Vorrichtung (2a-b) anzeigt;
Herstellen einer WebSocket-Verbindung;
Speichern von Dienstkapazitätsdaten für die Client-Vorrichtung (2a-b) auf einem Datenspeicher (59), wobei die Dienstkapazitätsdaten auf dem Indikator für die SIP-Dienstkapazität beruhen;
Empfangen der SIP-Nachricht von der Client-Vorrichtung (2a-b);
Hinzufügen eines Header-Felds zu der SIP-Nachricht, wobei der Inhalt des Header-Felds auf den Dienstkapazitätsdaten beruht, wodurch sich eine modifizierte SIP-Nachricht ergibt; und
Weiterleiten der modifizierten SIP-Nachricht an einen Router einer SIP-Anwendung, wobei der Router der SIP-Anwendung das hinzugefügte Header-Feld analysiert und die modifizierte SIP-Nachricht an die entsprechende SIP-Anwendung weiterleitet.

2. Server (1) nach Anspruch 1, wobei der Indikator für die SIP-Dienstkapazität in dem Header der Anforderung eines WebSocket-Handshakes umfasst ist, dessen Name aus der Gruppe aus Header-Namen bestehend aus Sec-WebSocket-Protocol, Sec-WebSocket-Service, Sec-WebSocket-Application, Accept-Service und Accept-Application ausgewählt ist.

3. Server (1) nach einem der vorhergehenden Ansprüche, wobei die Anweisungen Anweisungen umfassen, die Anweisungen, eine SIP-Nachricht zu empfangen, ein Header-Feld hinzuzufügen und die modifizierte SIP-Nachricht weiterzuleiten, für beliebige weitere SIP-Nachrichten zu wiederholen, die über die WebSocket-Verbindung von der Client-Vorrichtung (2a-b) empfangen werden.

4. Server (1) nach einem der vorhergehenden Ansprüche, wobei die Dienstkapazitätsdaten eine Zuordnung zu einer WebSocket-Verbindung umfassen.

5. Server (1) nach einem der vorhergehenden Ansprüche, wobei es sich bei dem Header-Feld der SIP-Nachricht um ein Accept-Contact- oder ein Contact-Header-Feld handelt.

6. Server (1) nach einem der vorhergehenden Ansprüche, wobei der Server einen Router für eine SIP-Anwendung umfasst.

7. Server (1) nach einem der vorhergehenden Ansprüche, wobei der Server angeordnet ist, um die modifizierte SIP-Nachricht zu dem Router für die SIP-Anwendung weiterzuleiten, der sich in einer anderen Vorrichtung als dem Server befindet.

8. Verfahren zum Weiterleiten einer SIP(Session Initiation Protocol)-Nachricht, wobei das Verfahrendurch einen Server (1) ausgeführt wird und die folgenden Schritte umfasst:
Empfangen (30) einer Anforderung eines WebSocket-Handshakes von einer Client-Vorrichtung (2a-b), wobei die Anforderung eines WebSocket-Handshakes einen Indikator für eine SIP-Dienstkapazität für die Client-Vorrichtung (2a-b) umfasst, wobei der Indikator für die SIP-Dienstkapazität zwei oder mehr Header der Anforderung eines WebSocket-Handshakes umfasst, wobei jeder Header eine einzelne SIP-Dienstkapazität der Client-Vorrichtung (2a-b) anzeigt;
Herstellen (31) einer WebSocket-Verbindung;
Speichern (32) von Dienstkapazitätsdaten, die der Client-Vorrichtung (2a-b) zugeordnet sind, auf einem Datenspeicher, wobei die Dienstkapazitätsdaten auf dem Indikator für die SIP-Dienstkapazität beruhen;
Empfangen (34) der SIP-Nachricht von der Client-Vorrichtung (2a-b);
Hinzufügen (36) eines Header-Felds zu der SIP-Nachricht, wobei der Inhalt des Header-Felds auf den Dienstkapazitätsdaten beruht, wodurch sich eine modifizierte SIP-Nachricht ergibt; und
Weiterleiten (38) der modifizierten SIP-Nachricht an einen Router einer SIP-Anwendung, wobei der Router der SIP-Anwendung das hinzugefügte Header-Feld analysiert und die modifizierte SIP-Nachricht an die entsprechende SIP-Anwendung weiterleitet.

9. Verfahren nach Anspruch 8, wobei bei dem Schritt des Empfangens (30) der Anforderung eines WebSocket-Handshakes ein Indikator für die SIP-Dienstkapazität in dem Header der Anforderung eines WebSocket-Handshakes umfasst ist, wobei der Name des Headers aus der Gruppe aus Header-Namen bestehend aus Sec-WebSocket-Protocol, Sec-WebSocket-Service, Sec-WebSocket-Application, Accept-Service und Accept-Application ausgewählt ist.

10. Verfahren nach einem der Ansprüche 8 oder 9, wobei die Schritte des Empfangens (34) der SIP-Nachricht, der Hinzufügens (36) des Header-Felds und des Weiterleitens (38) der modifizierten SIP-Nachricht für beliebige weitere SIP-Nachrichten wiederholt werden, die über die WebSocket-Verbindung von der Client-Vorrichtung (2a-b) empfangen werden.

11. Verfahren nach einem der Ansprüche 8 bis 10, wobei der Schritt des Speicherns (32) der Dienstkapazitätsdaten das Speichern der Dienstkapazitätsdaten umfasst, die eine Zuordnung zu der WebSocket-Verbindung umfassen.

12. Verfahren nach einem der Ansprüche 8 bis 11, wobei es sich bei dem Schritt des Hinzufügens (36) des Header-Felds zu der SIP-Nachricht bei dem Header-Feld um ein Accept-Contact- oder ein Contact-Header-Feld handelt.

13. Computerprogramm (71, 58) zum Weiterleiten einer SIP(Session Initiation Protocol)-Nachricht, wobei das Computerprogramm einen Computerprogrammcode umfasst, der, wenn dieser auf einem Server umgesetzt wird, denServer zu Folgenden veranlasst:
Empfangen einer Anforderung eines WebSocket-Handshakes von einer Client-Vorrichtung (2a-b), wobei die Anforderung des WebSocket-Handshakes einen Indikator für eine SIP-Dienstkapazität für die Client-Vorrichtung (2a-b) beinhaltet, wobei der Indikator für die SIP-Dienstkapazität zwei oder mehr Header der Anforderung eines WebSocket-Handshakes umfasst, wobei jeder Header eine einzelne SIP-Dienstkapazität der Client-Vorrichtung (2a-b) anzeigt;
Herstellen einer WebSocket-Verbindung;
Speichern von Dienstkapazitätsdaten, die der Client-Vorrichtung (2a-b) zugeordnet sind, auf einem Datenspeicher wobei die Dienstkapazitätsdaten auf dem Indikator für die SIP-Dienstkapazität beruhen;
Empfangen der SIP-Nachricht von der Client-Vorrichtung (2a-b);
Hinzufügen eines Header-Felds zu der SIP-Nachricht, wobei der Inhalt des Header-Felds auf den Dienstkapazitätsdaten beruht, wodurch sich eine modifizierte SIP-Nachricht ergibt; und
Weiterleiten der modifizierten SIP-Nachricht an einen Router einer SIP-Anwendung, wobei der Router der SIP-Anwendung das hinzugefügte Header-Feld analysiert und die modifizierte SIP-Nachricht an die entsprechende SIP-Anwendung weiterleitet.

## Revendications

1. Serveur (1) pour transmettre un message de protocole d'initiation de session, SIP, le serveur comprenant :
un processeur (50) ; et
un produit de programme informatique (54) stockant des instructions qui, lorsqu'elles sont exécutées par le processeur, amènent le serveur (1) :
à recevoir une demande d'établissement de liaison WebSocket en provenance d'un dispositif client (2a-b), la demande d'établissement de liaison WebSocket comprenant un indicateur de capacité de service SIP pour le dispositif client (2a-b), dans lequel l'indicateur de capacité de service SIP comprend au moins deux en-têtes de la demande d'établissement de liaison WebSocket, chaque en-tête indiquant une capacité de service SIP unique du dispositif client (2a-b) ;
à établir une connexion WebSocket ;
à stocker, dans une mémoire de données (59), des données de capacité de service pour le dispositif client (2a-b), les données de capacité de service étant basées sur l'indicateur de capacité de service SIP ;
à recevoir le message SIP en provenance du dispositif client (2a-b) ;
à ajouter un champ d'en-tête au message SIP, le contenu du champ d'en-tête étant basé sur les données de capacité de service, donnant lieu à un message SIP modifié ; et
à transférer le message SIP modifié à un routeur d'application SIP, dans lequel le routeur d'application SIP analyse le champ d'en-tête ajouté et transmet le message SIP modifié à une application SIP appropriée.

2. Serveur (1) selon la revendication 1, dans lequel l'indicateur de capacité de service SIP est compris dans l'en-tête de la demande d'établissement de liaison WebSocket, dont le nom est choisi dans le groupe de noms d'en-tête constitué de Sec-WebSocket-Protocol, de Sec-WebSocket -Service, de Sec-WebSocket-Application, d'Accept-Service et d'Accept-Application.

3. Serveur (1) selon l'une quelconque des revendications précédentes, dans lequel les instructions comprennent des instructions pour répéter les instructions afin de recevoir un message SIP, d'ajouter un champ d'en-tête, et de transmettre le message SIP modifié, pour tout autre message SIP en provenance du dispositif client (2a-b) reçu par l'intermédiaire de la connexion WebSocket.

4. Serveur (1) selon l'une quelconque des revendications précédentes, dans lequel les données de capacité de service comprennent une association avec la connexion WebSocket.

5. Serveur (1) selon l'une quelconque des revendications précédentes, dans lequel le champ d'en-tête du message SIP est un champ d'en-tête Accept-Contact ou Contact.

6. Serveur (1) selon l'une quelconque des revendications précédentes, dans lequel le serveur comprend le routeur d'application SIP.

7. Serveur (1) selon l'une quelconque des revendications précédentes, dans lequel le serveur est agencé pour transmettre le message SIP modifié au routeur d'application SIP se trouvant dans un dispositif différent du serveur.

8. Procédé de transmission d'un message de protocole de d'initiation de session, SIP, le procédé étant exécuté par un serveur (1) et comprenant les étapes :
de réception (30) d'une demande d'établissement de liaison WebSocket en provenance d'un dispositif client (2a-b), la demande d'établissement de liaison WebSocket comprenant un indicateur de capacité de service SIP pour le dispositif client (2a-b), dans lequel l'indicateur de capacité de service SIP comprend au moins deux en-têtes de la demande d'établissement de liaison WebSocket, chaque en-tête indiquant une capacité de service SIP unique du dispositif client (2a-b) ;
d'établissement (31) d'une connexion WebSocket ;
de stockage (32), dans une mémoire de données, de données de capacité de service associées au dispositif client (2a-b), les données de capacité de service étant basées sur l'indicateur de capacité de service SIP ;
de réception (34) du message SIP en provenance du dispositif client (2a-b) ;
d'ajout (36) d'un champ d'en-tête au message SIP, le contenu du champ d'en-tête étant basé sur les données de capacité de service, donnant lieu à un message SIP modifié ; et
de transfert (38) du message SIP modifié à un routeur d'application SIP, dans lequel le routeur d'application SIP analyse le champ d'en-tête ajouté et transmet le message SIP modifié à une application SIP appropriée.

9. Procédé selon la revendication 8, dans lequel, dans l'étape de réception (30) de la demande d'établissement de liaison WebSocket, l'indicateur de capacité de service SIP est compris dans l'en-tête de la demande d'établissement de liaison WebSocket, et dans lequel le nom de l'en-tête est choisi dans le groupe de noms d'en-tête constitué de Sec-WebSocket-Protocol, de Sec-WebSocket-Service, de Sec-WebSocket -Application, d'Accept-Service et d'Accept-Application.

10. Procédé selon l'une quelconque des revendications 8 à 9, dans lequel les étapes de réception (34) du message SIP, d'ajout (36) du champ d'en-tête, et de transmission (38) du message SIP modifié sont répétées pour tout autre message SIP reçu en provenance du dispositif client (2a-b) par l'intermédiaire de la connexion WebSocket.

11. Procédé selon l'une quelconque des revendications 8 à 10, dans lequel l'étape de stockage (32) des données de capacité de service comprend le stockage des données de capacité de service comprenant une association avec la connexion WebSocket.

12. Procédé selon l'une quelconque des revendications 8 à 11, dans lequel, dans l'étape d'ajout (36) du champ d'en-tête au message SIP, le champ d'en-tête est un champ d'en-tête Accept-Contact ou Contact.

13. Programme informatique (71, 58) pour transmettre un message de protocole d'initiation de session, SIP, le programme informatique comprenant le code de programme informatique qui, lorsqu'il est exécuté sur un serveur, amène le serveur :
à recevoir une demande d'établissement de liaison WebSocket en provenance d'un dispositif client (2a-b), la demande d'établissement de liaison WebSocket comprenant un indicateur de capacité de service SIP pour le dispositif client (2a-b),
dans lequel l'indicateur de capacité de service SIP comprend au moins deux en-têtes de la demande d'établissement de liaison WebSocket, chaque en-tête indiquant une capacité de service SIP unique du dispositif client (2a-b) ;
à établir une connexion WebSocket ;
à stocker, dans une mémoire de données, des données de capacité de service associées au dispositif client (2a-b), les données de capacité de service étant basées sur l'indicateur de capacité de service SIP ;
à recevoir le message SIP en provenance du dispositif client (2a-b) ;
à ajouter un champ d'en-tête au message SIP, le contenu du champ d'en-tête étant basé sur les données de capacité de service, donnant lieu à un message SIP modifié ; et
à transférer le message SIP modifié à un routeur d'application SIP, dans lequel le routeur d'application SIP analyse le champ d'en-tête ajouté et transmet le message SIP modifié à une application SIP appropriée.
